# EUROPÄISCHE PATENTSCHRIFT

(11) **EP 3 268 268 B1**
(45) Veröffentlichungstag und Bekanntmachung des Hinweises auf die Patenterteilung: **18.09.2019**
(21) Anmeldenummer: 16731913.6
(22) Anmeldetag: 24.06.2016
(51) Int. Cl.: B62D 65/18

(54) **VORRICHTUNG UND VERFAHREN ZUM FÖRDERN VON WERKSTÜCKEN**
DEVICE AND METHOD FOR CONVEYING WORKPIECES
DISPOSITIF ET PROCÉDÉ DE TRANSPORT DE PIÈCES

(30) Priorität: 08.07.2015 DE 102015212790
(43) Veröffentlichungstag der Anmeldung: 17.01.2018
(73) Patentinhaber: Dürr Systems AG, 74321 Bietigheim-Bissingen (DE)
(72) Erfinder: STRAUBE, Roland, 70794 Filderstadt (DE)
(74) Vertreter: Söltenfuss, Dirk Christian
(86) Internationale Anmeldenummer: PCT/EP2016/064669
(87) Internationale Veröffentlichungsnummer: WO 2017/005509

(56) Entgegenhaltungen:
- DE-A1- 10 027 730
- DE-A1-102006 024 645
- FR-A1- 2 979 889
- US-A1- 2014 103 591

## Beschreibung

Die vorliegende Erfindung betrifft eine Vorrichtung zum Fördern von Werkstücken, wie beispielsweise Fahrzeugkarossen, insbesondere in einer Fertigungslinie von Kraftfahrzeugen.

Im Serienfahrzeugbau ist es bekannt, die Rohbau-Karossen in einer Hauptmontagelinie mit einem Inneneinbau auszustatten, dann in einer so genannten Hochzeit mit Fahrwerk und Antriebsstrang zu verbinden und anschließend mit Fahrzeugrädern auszustatten. Dabei ist es üblich, die Karossen mit einer geeigneten Fördertechnik zu transportieren und der Hochzeit zu übergeben. Bei der Fertigung von Fahrzeugen unterschiedlicher Modellreihen in einer Fertigungslinie kommt es häufig vor, dass sich die Fahrzeuge in ihren Bodenstrukturen und damit auch in ihren Aufnahmepunkten für die Fördertechnik unterscheiden. Um solche unterschiedlichen Aufnahmepunkte auszugleichen, können Adapter zwischen der Karosse und der Fördertechnik eingesetzt werden. Solche Adapter, wie sie zum Beispiel aus der DE 10 2008 022 559 A1 bekannt sind, können in den Aufnahmen der Karosse verriegelt werden.

Es hat sich in der Praxis gezeigt, dass die Adapter nach der Hochzeit zum Beispiel durch ein Verkleben mit der Hohlraumversiegelung der Karosse zum Teil nur schwer bzw. aufwändig wieder von der Karosse getrennt werden können.

Die DE 10 2006 024 645 A1 offenbart eine Verriegelungsvorrichtung zum Verriegeln eines Werkstücks an einem Werkstückträger, auf welcher der Oberbegriff des Anspruchs 1 basiert.

Der Erfindung liegt die Aufgabe zugrunde, eine verbesserte Vorrichtung zum Fördern von Werkstücken, insbesondere in einer Fertigungslinie von Kraftfahrzeugen, zu schaffen, mit denen die Prozesssicherheit erhöht werden kann.

Diese Aufgabe wird gelöst durch eine Vorrichtung zum Fördern von Werkstücken mit den Merkmalen des Anspruchs 1. Vorteilhafte Ausgestaltungen der Erfindung sind Gegenstand der abhängigen Ansprüche.

Die erfindungsgemäße Vorrichtung zum Fördern von Werkstücken weist eine Fördertechnik zum Tragen und Transportieren der Werkstücke und einen Adapter zum (lösbaren) Verbinden der Werkstücke mit der Fördertechnik auf.

Die erfindungsgemäße Vorrichtung weist einen oder bevorzugt mehrere Adapter zum Verbinden der Werkstücke mit der Fördertechnik auf. Von diesen Adaptern können ein oder mehrere Adapter in einer speziellen Weise gemäß der vorliegenden Erfindung ausgestaltet sein. Wahlweise kann die Vorrichtung neben ein oder mehreren erfindungsgemäß ausgestalteten Adaptern auch ein oder mehrere, nicht erfindungsgemäß ausgestaltete Adapter (z.B. herkömmliche Adapter) enthalten. Die nachfolgend erläuterten spezifischen Ausgestaltungen des Adapters beziehen sich jeweils auf den wenigstens einen Adapter der Vorrichtung, der erfindungsgemäß ausgestaltet ist.

Der Adapter weist eine Verriegelungsmechanik auf, die ausgestaltet ist, um den Adapter wahlweise an einer Aufnahme des Werkstücks und/oder an einer Aufnahme der Fördertechnik zu verriegeln.

Die erfindungsgemäße Vorrichtung weist eine Fördertechnik mit einer oder bevorzugt mehreren Aufnahmen zum Aufnehmen eines erfindungsgemäß ausgestalteten Adapters auf. Wahlweise kann die Fördertechnik der Erfindung neben ein oder mehreren Aufnahmen für erfindungsgemäß ausgestaltete Adapter auch ein oder mehrere Aufnahmen für nicht erfindungsgemäß ausgestaltete (z.B. herkömmliche) Adapter aufweisen. Die nachfolgend erläuterten spezifischen Ausgestaltungen der Aufnahmen der Fördertechnik beziehen sich jeweils auf die wenigstens eine erfindungsgemäß ausgestaltete Aufnahme für einen erfindungsgemäß ausgestalteten Adapter.

In ähnlicher Weise haben Werkstücke, die mit der erfindungsgemäßen Vorrichtung befördert werden sollen, eine oder bevorzugt mehrere Aufnahmen zum Aufnehmen eines erfindungsgemäß ausgestalteten Adapters. Wahlweise können die Werkstücke neben ein oder mehreren Aufnahmen für erfindungsgemäß ausgestaltete Adapter auch ein oder mehrere Aufnehmen für nicht erfindungsgemäß ausgestaltete (z.B. herkömmliche) Adapter aufweisen. Die nachfolgend erläuterten spezifischen Ausgestaltungen der Aufnahmen der Werkstücke beziehen sich jeweils auf die wenigstens eine Aufnahme für einen erfindungsgemäß ausgestalteten Adapter.

Der Adapter weist bevorzugt ein erstes Profilelement zum zumindest teilweisen Eingreifen an der Aufnahme des Werkstücks und ein zweites Profilelement zum zumindest teilweisen Eingreifen an der Aufnahme der Fördertechnik auf.

Durch ein wahlweises Verriegeln des Adapters an einer Aufnahme des Werkstücks oder an einer Aufnahme der Fördertechnik kann der Adapter jeweils sicher zwischen Werkstück und Fördertechnik übergeben werden, indem er von dem einen Element gelöst und an dem anderen Element verriegelt wird. Auf diese Weise kann die gesamte Prozesssicherheit für das Bearbeiten der Werkstücke erhöht werden. Hierzu sind weder zusätzliche Werkzeuge noch zusätzlicher Aufwand erforderlich.

Gemäß der Erfindung ist der Adapter außerdem gleichzeitig an einer Aufnahme des Werkstücks und an einer Aufnahme der Fördertechnik verriegelbar. Auf diese Weise kann das Werkstück über den Adapter noch sicherer an der Fördertechnik gehalten und transportiert werden. Dies kann z.B. von Vorteil sein, wenn das Werkstück ungleichmäßig belastet wird und deshalb nicht allein durch sein Eigengewicht gleichmäßig auf der Fördertechnik ruht. Dies kann beispielsweise während der Fertigung von Hybrid- oder Elektrofahrzeugen der Fall sein, wenn schwere Batterien montiert werden und sich so der Schwerpunkt verschiebt.

Bei dem Werkstück handelt es sich beispielsweise um eine Kraftfahrzeugkomponente. Die Erfindung ist besonders geeignet für das Fördern von Fahrzeugkarossen in einer Fertigungs- bzw. Montagelinie von Kraftfahrzeugen. Bei der Fördertechnik handelt es sich zum Beispiel um Hängewagen, Pendelförderer, Schubplatten, Paletten, Gestelle und dergleichen.

Die Aufnahmen der Werkstücke und der Fördertechnik sind bevorzugt als Aufnahmeöffnungen ausgestaltet, in welche das erste Profilelement bzw. das zweite Profilelement des Adapters zumindest teilweise eingreifen kann und in welchen der Adapter dann mittels der Verriegelungsmechanik verriegelt werden kann. Die Aufnahmen der Werkstücke und/oder der Fördertechnik können vorzugsweise mit Kulissen oder anderen Verriegelungselementen ausgestattet sein, die mit dem Adapter bzw. seinen Profilelementen und/oder Verriegelungselementen wechselwirken.

Vorzugsweise können der Adapter, eine Aufnahme der Werkstücke und/oder eine Aufnahme der Fördertechnik mit Puffer- oder Dämpfungselementen ausgestattet sein, die während des Einführens des Adapters in diese Aufnahme des Werkstücks oder der Fördertechnik für einen ein-, zwei- oder dreidimensionalen Toleranzausgleich sorgen können.

Gemäß der Erfindung weist die Verriegelungsmechanik wenigstens ein erstes Verriegelungselement zum Verriegeln des Adapters an der Aufnahme des Werkstücks und wenigstens ein zweites Verriegelungselement zum Verriegeln des Adapters an der Aufnahme der Fördertechnik auf. Die Anzahlen der ersten und der zweiten Verriegelungselemente können gleich oder unterschiedlich zueinander sein.

Gemäß der Erfindung weist die Verriegelungsmechanik zudem ein Stellelement zum Betätigen des wenigstens einen ersten Verriegelungselements und des wenigstens einen zweiten Verriegelungselements auf. Dabei sind das wenigstens eine erste Verriegelungselement und das wenigstens eine zweite Verriegelungselement über das (gemeinsame) Stellelement derart miteinander gekoppelt, dass sich entweder das wenigstens eine erste Verriegelungselement oder das wenigstens eine zweite Verriegelungselement oder das wenigstens eine erste Verriegelungselement und das wenigstens eine zweite Verriegelungselement in ihren den Adapter an den Aufnahmen des Werkstücks und/oder der Fördertechnik verriegelbaren Stellung befinden.

Vorzugsweise können das wenigstens eine erste Verriegelungselement und/oder das wenigstens eine zweite Verriegelungselement an dem Stellelement befestigt oder einstückig mit dem Stellelement ausgebildet sein. Auf diese Weise kann das jeweilige Verriegelungselement gemeinsam mit dem Stellelement bewegt werden, um es zwischen seiner den Adapter verriegelnden und seiner den Adapter nicht verriegelnden Stellung zu bewegen.

Vorzugsweise können das wenigstens eine erste Verriegelungselement und/oder das wenigstens eine zweite Verriegelungselement wenigstens ein Zwischenelement aufweisen, das mit dem Stellelement gekoppelt ist. Auf diese Weise kann eine Bewegung des Stellelements auf das jeweilige Verriegelungselement übertragen werden, um das Verriegelungselement zwischen seiner den Adapter verriegelnden und seiner den Adapter nicht verriegelnden Stellung zu bewegen.

In einer bevorzugten Ausgestaltung der Erfindung ist das eine Element des wenigstens einen ersten Verriegelungselements und des wenigstens einen zweiten Verriegelungselements, bevorzugt das erste Verriegelungselement, an dem Stellelement befestigt oder einstückig mit dem Stellelement ausgebildet und weist das andere Element des wenigstens einen ersten Verriegelungselements und des wenigstens einen zweiten Verriegelungselement, bevorzugt das wenigstens eine zweite Verriegelungselement, wenigstens ein mit dem Stellelement gekoppeltes Zwischenelement auf.

In einer weiteren bevorzugten Ausgestaltung der Erfindung kann das Stellelement mittels einer Kulissenführung in dem Adapter, bevorzugt in einem Gehäuse des Adapters, zwischen einer ersten Betriebsstellung der Verriegelungsmechanik, in welcher der Adapter an der Aufnahme des Werkstücks verriegelbar ist, und einer zweiten Betriebsstellung der Verriegelungsmechanik, in welcher der Adapter an der Aufnahme der Fördertechnik verriegelbar ist, geführt sein. Vorzugsweise enthält diese Kulissenführung eine Kulisse, die beispielsweise in oder an dem Stellelement ausgebildet ist, und einen in diese Kulisse eingreifenden Führungsstift, der beispielsweise an dem ersten oder zweiten Profilelement des Adapters vorgesehen oder befestigt ist.

In einer weiteren bevorzugten Ausgestaltung der Erfindung kann das Stellelement mittels einer Kulissenführung in dem Adapter über eine dritte Betriebsstellung der Verriegelungsmechanik, in welcher der Adapter an den Aufnahmen des Werkstücks und der Fördertechnik verriegelbar ist, zwischen der obigen ersten Betriebsstellung und der obigen zweiten Betriebsstellung der Verriegelungsmechanik geführt sein.

In einer weiteren bevorzugten Ausgestaltung der Erfindung können das wenigstens eine erste Verriegelungselement und/oder das wenigstens eine zweite Verriegelungselement derart ausgestaltet sein, dass sie zwischen einer den Adapter verriegelnden Betriebsstellung und einer den Adapter nicht verriegelnden Betriebsstellung um eine Längsachse des Adapters drehbar sind.

In einer weiteren bevorzugten Ausgestaltung der Erfindung können das wenigstens eine erste Verriegelungselement und/oder das wenigstens eine zweite Verriegelungselement derart ausgestaltet sein, dass sie zwischen einer den Adapter verriegelnden Betriebsstellung und einer den Adapter nicht verriegelnden Betriebsstellung parallel zu einer Längsachse des Adapters, bevorzugt in axialer Richtung des Adapters bzw. seines Stellelements, verschiebbar sind.

Vorzugsweise weist der Adapter ein erstes Verriegelungselement auf, das zwischen einer den Adapter verriegelnden Betriebsstellung und einer den Adapter nicht verriegelnden Betriebsstellung um eine Längsachse des Adapters drehbar und zugleich parallel zur Längsachse des Adapters verschiebbar ist.

In einer weiteren bevorzugten Ausgestaltung der Erfindung können das wenigstens eine erste Verriegelungselement und/oder das wenigstens eine zweite Verriegelungselement derart ausgestaltet sein, dass sie zwischen einer den Adapter verriegelnden Betriebsstellung und einer den Adapter nicht verriegelnden Betriebsstellung um eine Schwenkachse parallel zu einer Längsachse des Adapters drehbar sind.

In einer weiteren bevorzugten Ausgestaltung der Erfindung können das wenigstens eine erste Verriegelungselement und/oder das wenigstens eine zweite Verriegelungselement derart ausgestaltet sein, dass sie in Richtung parallel zu einer Längsachse des Adapters unverschiebbar in dem ersten Profilelement bzw. dem zweiten Profilelement gehalten sind.

Vorzugsweise weist der Adapter ein, zwei oder mehr zweite Verriegelungselemente auf, die zwischen einer den Adapter verriegelnden Betriebsstellung und einer den Adapter nicht verriegelnden Betriebsstellung um eine Schwenkachse parallel zu einer Längsachse des Adapters drehbar und zugleich in Richtung parallel zur Längsachse des Adapters unverschiebbar in dem zweiten Profilelement gehalten sind.

In einer noch weiteren bevorzugten Ausgestaltung der Erfindung kann die Verriegelungsmechanik ein bevorzugt mit einem Werkzeug betätigbares Betätigungselement aufweisen, mit dem die Verriegelungsmechanik zwischen einer ersten Betriebsstellung, in welcher der Adapter an der Aufnahme des Werkstücks verriegelbar ist, und einer zweiten Betriebsstellung, in welcher der Adapter an der Aufnahme der Fördertechnik verriegelbar ist, und optional einer dritten Betriebsstellung, in welcher der Adapter an den Aufnahmen des Werkstücks und der Fördertechnik verriegelbar ist, verstellbar ist. Das Betätigungselement ist vorzugsweise für Werkzeuge in einer (voll-)automatisierten Fertigungslinie geeignet.

In einer weiteren bevorzugten Ausgestaltung der Erfindung weist die Fördertechnik einen Betätigungs- oder Antriebsmechanismus zum Verstellen der Verriegelungsmechanik zwischen einer ersten Betriebsstellung, in welcher der Adapter an einer Aufnahme des Werkstücks verriegelbar ist, und einer zweiten Betriebsstellung, in welcher der Adapter an einer Aufnahme der Fördertechnik verriegelbar ist, und optional einer dritten Betriebsstellung, in welcher der Adapter an den Aufnahmen des Werkstücks und der Fördertechnik verriegelbar ist, auf. Der in die Fördertechnik integrierte Betätigungs- oder Antriebsmechanismus kann bevorzugt über die Fördertechnik angesteuert werden, sodass ein hoher Automationsgrad erzielbar ist. Der Betätigungs- oder Antriebsmechanismus ist bevorzugt motorisch, pneumatisch und/oder hydraulisch ausgestaltet.

In einer Ausgestaltung der Erfindung weist die Fördertechnik wenigstens eine Aufnahme auf, an welcher der Adapter statisch, d.h. positionsgenau verriegelbar ist.

In einer anderen Ausgestaltung der Erfindung weist die Fördertechnik wenigstens eine Aufnahme auf, an welcher ein Halter schwimmend montierbar ist, und weist der Halter eine Aufnahme auf, an welcher der Adapter statisch verriegelbar ist. Auf diese Weise ist der Adapter insgesamt schwimmend an der Fördertechnik gelagert. Durch eine solche schwimmende Lagerung können zum Beispiel Fertigungstoleranzen an den Werkstücken bzw. deren Aufnahmen ausgeglichen werden.

Für die schwimmende Lagerung des Halters an der Aufnahme der Fördertechnik können in einen Zwischenraum zwischen der Aufnahme und dem Halter vorzugsweise ein oder mehrere elastische Elemente eingesetzt werden. Für diesen Zweck geeignete elastische Elemente sind zum Beispiel Federelemente (z.B. Blattfedern, Tellerfedern, Schraubenfedern, etc.), Gummielemente, Schaumelemente, Dämpfer, und dergleichen.

Der Halter kann wahlweise fest, d.h. unlösbar in die Fördertechnik eingebaut oder integriert sein oder als Austauschteil / Ersatzteil lösbar und/oder wechselbar an der Fördertechnik vorgesehen sein.

In einer weiteren Ausgestaltung der Erfindung weist die Fördertechnik eine Sensorik zum Erfassen einer Betriebsstellung des Adapters und/oder eines Verriegelungszustandes des Adapters an einer Aufnahme des Werkstücks und/oder an der Aufnahme der Fördertechnik auf. Die Sensorik kann die erfasste Betriebsstellung bzw. den erfassten Verriegelungszustand an eine übergeordnete Steuerung (z.B. einer Fertigungslinie von Kraftfahrzeugen) rückmelden, sodass die Prozesssicherheit und der Automationsgrad erhöht werden können.

Gegenstand der Erfindung ist auch ein Adapter für eine oben beschriebene Vorrichtung der Erfindung. Der Adapter weist bevorzugt ein oder mehrere der in Zusammenhang mit der erfindungsgemäßen Vorrichtung genannten Merkmale in beliebiger Kombination auf.

Gegenstand der Erfindung ist ferner eine Fördertechnik für eine oben beschriebene Vorrichtung der Erfindung. Die Fördertechnik weist bevorzugt ein oder mehrere der in Zusammenhang mit der erfindungsgemäßen Vorrichtung genannten Merkmale in beliebiger Kombination auf.

Mit der oben beschriebenen Vorrichtung der Erfindung kann in vorteilhafter Weise ein Verfahren zum Fördern von Werkstücken ausgeführt werden, das die folgenden Schritte enthält: a) Fördern eines Werkstücks mittels einer Fördertechnik zu einer Werkstückbearbeitungsstation, wobei die Fördertechnik das Werkstück mittels mindestens eines Adapters trägt und wenigstens ein Adapter des mindestens einen Adapters an einer Aufnahme der Fördertechnik verriegelt ist; b) Übergeben des Werkstücks an die Werkstückbearbeitungsstation, wobei der wenigstens eine Adapter von der Fördertechnik gelöst wird; und c) nach der Bearbeitung des Werkstücks in der Werkstückbearbeitungsstation, Übergeben des wenigstens einen Adapters an eine Fördertechnik, wobei der wenigstens eine Adapter und an einer Aufnahme der Fördertechnik verriegelt wird.

Bei diesem Verfahren ist der Adapter in Schritt a) vorzugsweise auch an einer Aufnahme des Werkstücks verriegelt.

Ferner wird bei diesem Verfahren der wenigstens eine Adapter in Schritt c) vorzugsweise von dem Werkstück gelöst und an der Aufnahme der Fördertechnik verriegelt.

Obige sowie weitere Vorteile, Merkmale und Anwendungsmöglichkeiten der Erfindung werden aus der nachfolgenden Beschreibung von verschiedenen Ausführungsbeispielen anhand der beiliegenden Zeichnungen besser verständlich. Darin zeigen, größtenteils schematisch:
- Fig. 1: eine Perspektivansicht eines Ausführungsbeispiels einer Vorrichtung mit Fördertechnik und Adaptern gemäß der vorliegenden Erfindung;
- Fig. 2: eine Perspektivansicht eines Adapters gemäß einem Ausführungsbeispiel der Erfindung in seiner den Adapter an der Fördertechnik verriegelnden Betriebsstellung;
- Fig. 3: eine Perspektivansicht des Adapters von Fig. 2 in der Betriebsstellung von Fig. 2, mit sichtbar dargestellten inneren Komponenten;
- Fig. 4: eine Perspektivansicht der Verriegelungsmechanik des Adapters von Fig. 2 in der Betriebsstellung von Fig. 2;
- Fig. 5: eine Perspektivansicht des Adapters von Fig. 2 in einem statisch an einer Fördertechnik verriegelten Zustand, mit sichtbar dargestellten inneren Komponenten;
- Fig. 6: eine Perspektivansicht des Adapters von Fig. 2 in einem an einem Halter verriegelten Zustand;
- Fig. 7: eine Schnittansicht des Adapters von Fig. 2 in seinem an einem Halter verriegelten Zustand;
- Fig. 8: eine Perspektivansicht des Adapters von Fig. 2 in einem über einen Halter schwimmend an einer Fördertechnik montierten Zustand, mit sichtbar dargestellten inneren Komponenten;
- Fig. 9: eine Schnittansicht des schwimmend an einer Fördertechnik montierten Halters von Fig. 6 und 7;
- Fig. 10: eine Perspektivansicht des Adapters von Fig. 2 in seiner den Adapter an einem Werkstück verriegelnden Betriebsstellung;
- Fig. 11: eine Perspektivansicht des Adapters von Fig. 2 in der Betriebsstellung von Fig. 10, mit sichtbar dargestellten inneren Komponenten;

- Fig. 12: eine Perspektivansicht der Verriegelungsmechanik des Adapters von Fig. 2 in der Betriebsstellung von Fig. 10; und
- Fig. 13: eine Perspektivansicht des Adapters von Fig. 2 in einem an einem Werkstück verriegelten Zustand.

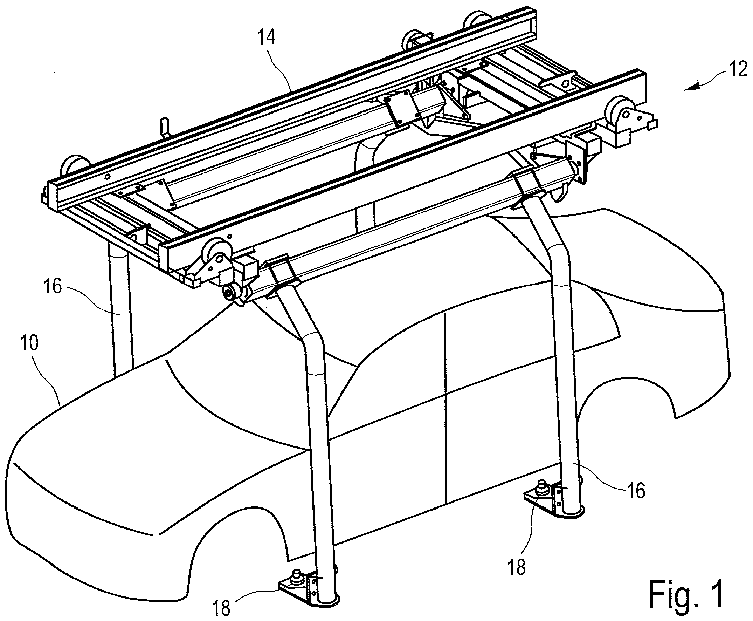

Fig. 1 zeigt zunächst eine bevorzugte Anwendungsmöglichkeit der Erfindung.

In der Serienfertigung von Kraftfahrzeugen werden die Karossen (Werkstücke im Sinne der Erfindung) 10 mit oder ohne Inneneinbau mit Hilfe einer Fördertechnik 12 zwischen den verschiedenen Fertigungsstationen (Werkstückbearbeitungsstationen im Sinne der Erfindung) transportiert. In dem in Fig. 1 dargestellten Beispiel weist die Fördertechnik 12 einen Hängewagen 14 auf, an dem mehrere Greifarme 16 vorgesehen sind, welche seitlich an der Karosse 10 vorbei geführt sind und die Karosse 10 untergreifen.

Damit in einer Fertigungslinie auch Fahrzeuge unterschiedlicher Modellreihen bearbeitet werden können, die sich in ihren Bodenstrukturen und damit auch in ihren Aufnahmepunkten für die Fördertechnik 12 unterscheiden, werden Adapter 18 als Verbindung zwischen der Karosse 10 und der Fördertechnik 12 eingesetzt. Diese Adapter 18 sind fahrzeug- bzw. modellspezifisch ausgebildet, sodass Unterschiede zwischen den Modellreihen ausgeglichen werden können.

Mit den Adaptern 18 gemäß der vorliegenden Erfindung soll es insbesondere möglich sein, ein nachfolgend erläutertes Verfahren zum Fördern eines Werkstücks mit hoher Prozesssicherheit zu realisieren.

Um eine Karosse 10 mit Hilfe einer Fördertechnik 12 innerhalb einer Fertigungslinie von Kraftfahrzeugen transportieren zu können, werden zunächst die auf die jeweilige Karosse 10 abgestimmten Adapter 18 an der Fördertechnik 12, zum Beispiel an den Greifarmen 16 eines Hängewagens 14 montiert und verriegelt. Die Greifarme 16 können dann über die Adapter 18 an den Aufnahmepunkten der Karosse 10 angreifen und auf diese Weise die Karosse 10 tragen. Die Karosse 10 kann dann von der Fördertechnik 12 zu einer Bearbeitungsstation transportiert werden.

An der Bearbeitungsstation wird die Karosse 10 von der Fördertechnik 12 an die Bearbeitungsstation bzw. eine Fördereinrichtung der Bearbeitungsstation (z.B. Palette, Schubplatte) übergeben. Dabei werden die Adapter 18 von der Fördertechnik 12 gelöst und mit der Karosse 10 verriegelt. Die Fördertechnik 12 kann dann von den Adaptern 18 und der Karosse 10 entfernt werden. Aufgrund ihrer Verriegelung an der Karosse 10 werden die Adapter 18 beim Entfernen der Fördertechnik 12 sicher von den Aufnahmen der Fördertechnik 12 getrennt und verbleiben an den Aufnahmen der Karosse 10.

Während der Bearbeitung der Karosse 10 in der Bearbeitungsstation (z.B. so genannte Hochzeit) bleiben die Adapter 18 an der Karosse 10 verriegelt. So können beispielsweise bei der Montage von Stoßdämpfern geeignete Greifwerkzeuge an den Adaptern 18 angreifen und die Karosse 10 gegen die Federkraft der Stoßdämpfer in Position halten.

Nach Durchlaufen der Bearbeitungsstation werden die Adapter 18 wieder von der Karosse 10 gelöst und mit einer bereitgestellten Fördertechnik 12 verriegelt. Diese Fördertechnik 12 kann die Fördertechnik aus dem ersten Schritt oder eine andere Fördertechnik sein. Nach dem Verriegeln der Adapter 18 an der Fördertechnik 12 bleibt das bearbeitete Werkstück, zum Beispiel die aufgerüstete Fahrzeugkarosse, in den Adaptern 18 an der Fördertechnik 12 zentriert.

Anschließend kann die Fahrzeugkarosse bzw. das Fahrzeug mit der Fördertechnik 12 einer weiteren Bearbeitungsstation zugeführt werden. Zum Beispiel kann das Fahrzeug 10 auf die Bodenebene übergeben werden. Beim anschließenden Entfernen der Fördertechnik 12 werden die Adapter 18 prozesssicher aus den Aufnahmen der Karosse 10 gezogen. Selbst wenn die Adapter 18 zum Beispiel durch eine Hohlraumversiegelung der Karosse 10 in den Aufnahmen der Karosse verklebt sein sollten, können die Adapter 18 durch ihre Verriegelung an der Fördertechnik 12 sicher und ohne zusätzlichen Aufwand entfernt werden.

Anschließend können Fahrzeug und Fördertechnik der jeweiligen Prozesstechnik folgen. Beispielsweise kann die Fördertechnik 12 mit den daran verriegelten Adaptern 18 wieder der Fertigungslinie zurückgeführt werden, um eine neue Karosse 10 aufzunehmen und zu transportieren.

Wie erläutert, zeichnen sich die erfindungsgemäßen Adapter 18 dadurch aus, dass sie wahlweise mit der Karosse 10 oder der Fördertechnik 12 verriegelt werden können. Vorzugsweise ist dies mit nur einem Betätigungselement des Adapters 18 möglich, an dem ein darauf abgestimmtes Werkzeug angreifen kann. Da entweder die Fahrzeugkarosse 10 oder die Fördertechnik mit dem Adapter 18 verriegelt ist und nie beide Verriegelungen gleichzeitig vorliegen können, kann der Fertigungsprozess sicher automatisch umgesetzt werden.

Dabei müssen nicht notwendigerweise alle in der Vorrichtung eingesetzten Adapter gemäß der Erfindung ausgestaltet sein. So können neben ein oder mehreren erfindungsgemäß ausgestalteten Adaptern 18 wahlweise auch ein oder mehrere andere Adapter (z.B. herkömmliche Adapter wie beispielsweise die eingangs beschriebenen) benutzt werden.

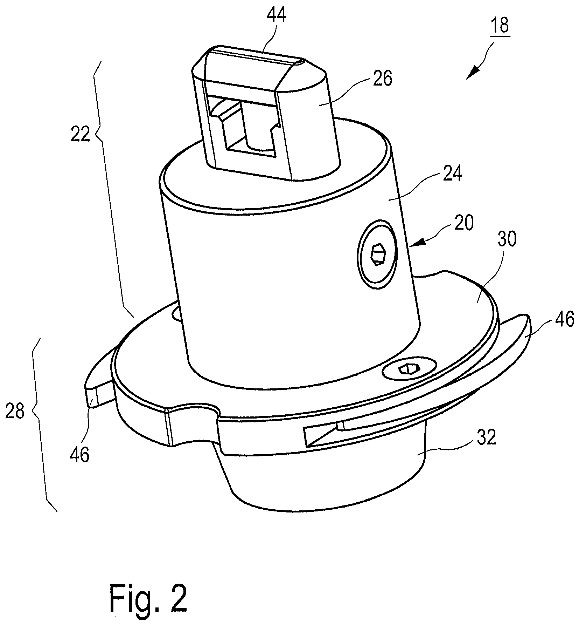

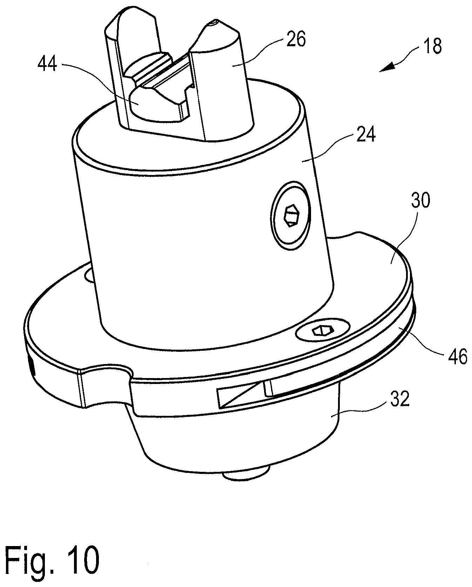

Ein bevorzugtes Ausführungsbeispiel eines Adapters 18 der Erfindung wird nachfolgend Bezug nehmend auf Fig. 2 bis 13 in mehr Einzelheiten erläutert. Dabei zeigen Fig. 2 bis 9 jeweils den Adapter 18 in seiner an der Fördertechnik 12 verriegelbaren bzw. verriegelten Betriebsstellung und zeigen Fig. 10 bis 13 jeweils den Adapter 18 in seiner an der Karosse bzw. allgemein dem Werkstück 10 verriegelbaren bzw. verriegelten Betriebsstellung.

Der Adapter 18 weist ein Gehäuse 20 mit einem ersten Profilelement 22 und einem zweiten Profilelement 28 auf. Das erste Profilelement 22 weist wiederum einen dem zweiten Profilelement 28 zugewandten, z.B. zylindrischen ersten Profilabschnitt 24 und einen dem zweiten Profilelement 28 abgewandten, z.B. dornartigen zweiten Profilabschnitt 26 auf. Das zweite Profilelement 28 weist einen dem ersten Profilelement 22 zugewandten, z.B. scheibenförmigen ersten Profilabschnitt 30 und einen dem ersten Profilelement 22 abgewandten, z.B. kegelstumpfförmigen zweiten Profilabschnitt 32 auf.

Das erste Profilelement 22 des Adapters 18 kann zumindest teilweise, bevorzugt zumindest mit seinem zweiten Profilabschnitt 26 in eine entsprechend ausgestaltete Aufnahme(öffnung) in der Fahrzeugkarosse 10 eingeführt werden, um den Adapter 18 mit Hilfe eines ersten Verriegelungselements 44 an der Fahrzeugkarosse 10 zu verriegeln. Das zweite Profilelement 28 des Adapters 18 kann zumindest teilweise, bevorzugt mit seinem ersten und seinem zweiten Profilabschnitt 30, 32 in eine entsprechend ausgestaltete Aufnahme(öffnung) 60, 64 in der Fördertechnik 12 eingeführt werden, um den Adapter 18 mittels wenigstens eines zweiten Verriegelungselements 46 an der Fördertechnik 12 zu verriegeln.

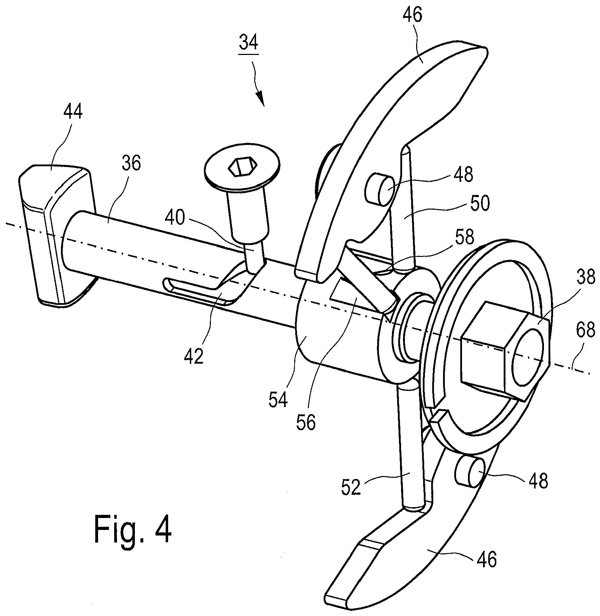

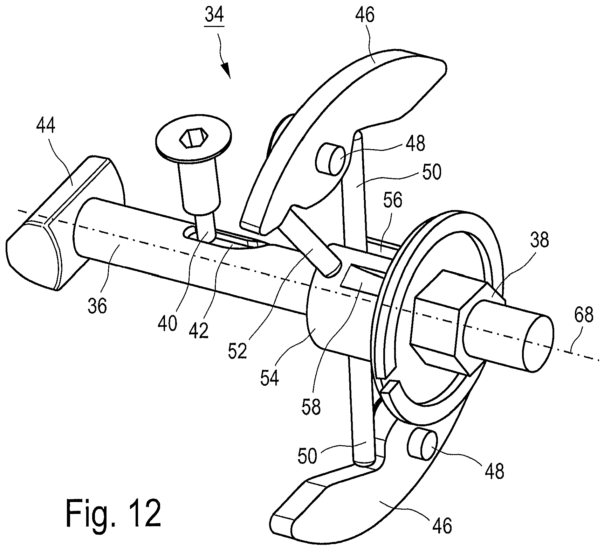

Das in diesem Ausführungsbeispiel eine erste Verriegelungselement 44 und die in diesem Ausführungsbeispiel zwei zweiten Verriegelungselemente 46 sind Bestandteile einer in dem Gehäuse 20 aufgenommenen Verriegelungsmechanik 34. Der Aufbau dieser Verriegelungsmechanik 34 ist insbesondere in Fig. 4 und 12 veranschaulicht.

In diesem Ausführungsbeispiel weist die Verriegelungsmechanik 34 ein Stellelement 36 in Form einer Welle mit kreisförmigem Querschnitt auf. An dem einen Ende des Stellelements 36, das in dem zweiten Profilabschnitt 32 des zweiten Profilelements 28 positioniert ist, ist ein Betätigungselement 38 in Form zum Beispiel einer Sechskantmutter drehfest mit dem Stellelement 36 verbunden. Mittels eines geeigneten Werkzeugs, zum Beispiel einer drehmoment-gesteuerten Schraubeinrichtung, kann das Stellelement 36 über das Betätigungselement 38 um seine Längsachse 68 gedreht werden.

An dem anderen Ende des Stellelements 36, das in dem zweiten Profilabschnitt 26 des ersten Profilelements 22 positioniert ist, ist das erste Verriegelungselement 44 befestigt oder vorzugsweise einstückig mit dem Stellelement 36 ausgebildet. Bei einer Drehung des Stellelements 36 um seine Längsachse 68 wird daher auch das erste Verriegelungselement 44 um die Längsachse 68 des Stellelements 36 gedreht.

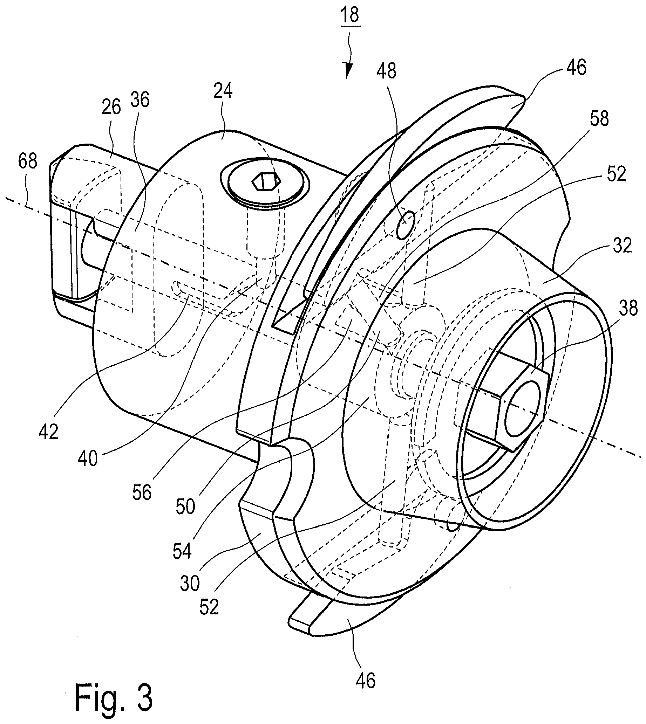

Das Stellelement 36 ist zudem über eine Kulissenführung in dem Gehäuse 20 des Adapters 18 geführt, sodass es bei einer Drehung um seine Längsachse 68 gleichzeitig in axialer Richtung im Gehäuse 20 verschoben wird. Diese Kulissenführung weist eine entsprechende Kulisse 42 im Außenumfang des Stellelements 36 sowie einen in diese Kulisse 42 eingreifenden Führungsstift 40 auf. Wie zum Beispiel in Fig. 3 erkennbar, ist dieser Führungsstift 40 im Bereich des ersten Profilabschnitts 24 des ersten Profilelements 22 am Gehäuse 20 des Adapters 18 fixiert. Die Kulissenführung 40, 42 begrenzt zugleich die Drehbewegung des Stellelements 36.

Bei einer Drehung des Stellelements 36 um seine Längsachse 68 wird somit die Verriegelungsmechanik 34 von einer ersten Betriebsstellung, in welcher der Adapter 18 nicht an dem Werkstück verriegelt ist (Fig. 2 bis 9), in eine zweite Betriebsstellung, in welcher der Adapter 18 an dem Werkstück 10 verriegelbar ist (Fig. 10 bis 13) überführt.

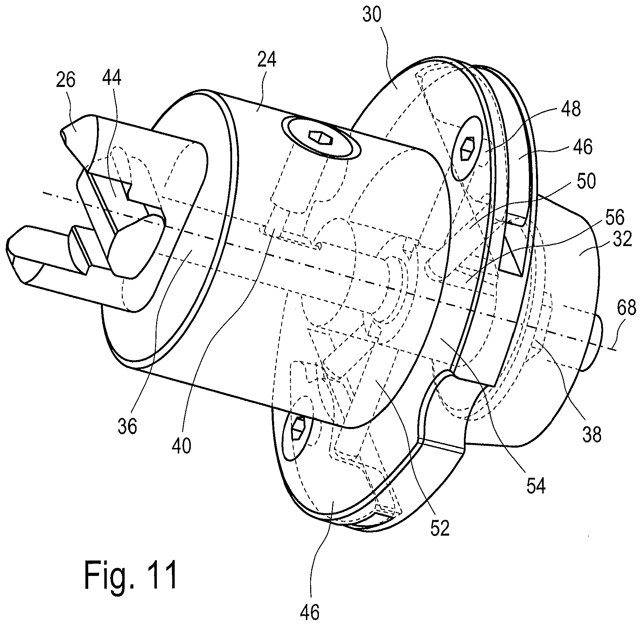

An dem Stellelement 36 ist zudem im Bereich der ersten Profilabschnitte 24, 30 des ersten und des zweiten Profilelements 22, 28 eine Stellbuchse 54 vorgesehen. Diese Stellbuchse 54 ist in einer entsprechenden Ausnehmung im Gehäuse 20 des Adapters 18 geführt (siehe z.B. Fig. 3 und 11) und derart an dem Stellelement 35 gelagert, dass das Stellelement 36 relativ zur Stellbuchse 54 drehbar ist, aber die Stellbuchse 54 bei der Verschiebung des Stellelements 36 in Richtung seiner Längsachse 68 mit dem Stellelement 36 ebenfalls in Richtung der Längsachse 68 verschoben wird. Beispielsweise sitzt die Stellbuchse 54 lose auf dem Stellelement 36 und ist zwischen zwei Anschlägen am Stellelement 36 in axialer Richtung an diesem gehalten.

Im scheibenförmigen ersten Profilabschnitt 30 des zweiten Profilelements 28 sind zudem (in diesem Beispiel zwei) zweite Verriegelungselemente 46 angeordnet. Diese zweiten Verriegelungselemente 46 sind jeweils in Form von Profilplatten ausgestaltet und um eine Schwenkachse 48 parallel zur Längsachse 68 des Stellelements schwenkbar gelagert. Zu beiden Seiten der Schwenkachsen 48 sind jeweils ein erster und ein zweiter Stellarm 50, 52 (Zwischenelemente im Sinne der Erfindung) an den Profilplatten 46 befestigt. Die den Profilplatten 46 abgewandten Enden der Stellarme 50, 52 greifen in erste und zweite Kulissen 56, 58 am Außenumfang der Stellbuchse 54 ein.

Die Schwenkachsen 48 der zweiten Verriegelungselemente 46 sind in dem ersten Profilabschnitt 30 des zweiten Profilelements 28 im Gehäuse 20 fest positioniert. Außerdem sind die zweiten Verriegelungselemente 46 in einer Ausnehmung im ersten Profilabschnitt 30 des zweiten Profilelements 28 aufgenommen, sodass sie nicht in einer Richtung parallel zur Längsachse 68 des Stellelements 36 verschoben werden können, sondern ausschließlich um die Schwenkachsen 48 gedreht werden können.

Die ersten und zweiten Kulissen 56, 58 verlaufen jeweils im Wesentlichen geradlinig und parallel zur Längsachse 68 des Stellelements 36. Die erste Kulisse 56, in welche der erste Stellarm 50 eingreift, wird dabei in Richtung zum zweiten Profilelement 28 hin allmählich tiefer, und die zweite Kulisse 58, in welche der zweite Stellarm 52 eingreift, wird in Richtung zum ersten Profilelement 22 hin allmählich tiefer. Mit anderen Worten ändern sich die Tiefen der ersten und der zweiten Kulissen 56, 58 in der Stellbuchse 54 in zueinander gegenläufiger Weise.

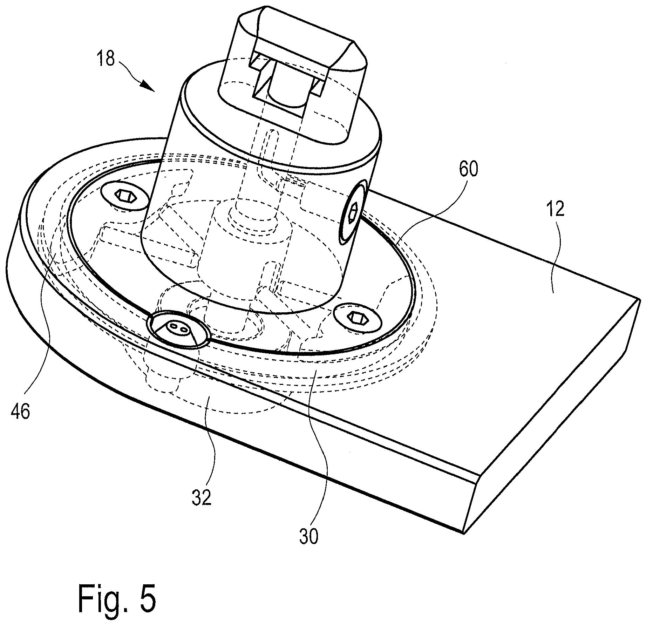

In der in Fig. 2 bis 9 gezeigten Betriebsstellung des Adapters 18, in der der Adapter 18 in einer Aufnahme(öffnung) einer Fördertechnik 12 verriegelbar ist, befindet sich die Stellbuchse 54 in ihrer zum ersten Profilelement 22 hin bewegten Stellung. In dieser Stellung befinden sich die Stellarme 50, 52 an dem dem zweiten Profilelement 28 zugewandten Ende der Stellbuchse 54 bzw. ihrer Kulissen 56, 58, d.h. befindet sich der erste Stellarm 50 an der tiefsten Stelle der ersten Kulisse 56 und befindet sich der zweite Stellarm 52 an der flachsten Stelle der zweiten Kulisse 58. Als Ergebnis wird die Seite der Profilplatte 46, an der der erste Stellarm 50 angebracht ist, nach innen gezogen und wird die andere Seite der Profilplatte 46, an der der zweite Stellarm 52 angebracht ist, nach außen gedrückt. Der nach außen gedrückte Teil der Profilplatte 46, an der der zweite Stellarm 52 angebracht ist, ragt so aus dem ersten Profilabschnitt 30 des zweiten Profilelements 28 radial nach außen und kann zum Beispiel in eine entsprechend geformte Ausnehmung oder Kulisse einer Aufnahme(öffnung) der Fördertechnik 12 eingreifen (siehe Fig. 5, 7 und 8) und so die Verriegelungsmechanik 34 und damit den Adapter 18 in der Aufnahme (öffnung) der Fördertechnik 12 verriegeln.

Wird nun ausgehend von dieser Betriebsstellung des Adapters 18 das Stellelement 36 um seine Längsachse 68 gedreht, so wird das Stellelement 36 zugleich in Richtung seiner Längsachse 68 zum zweiten Profilelement 28 hin verschoben. Die Stellbuchse 54 wird gemeinsam mit dem Stellelement 36 ebenfalls in Richtung der Längsachse 68 des Stellelements 36 und in Richtung zum zweiten Profilelement 28 hin verschoben. Dabei wandern die ersten und zweiten Stellarme 50, 52 der zweiten Verriegelungselemente 46 in den ersten und zweiten Kulissen 56, 58 jeweils in Richtung zum anderen Ende der Stellbuchse 54. Die Stellarme 50, 52 verhindern durch ihr Eingreifen in die Kulissen 56, 58 auch eine Drehung der Stellbuchse 54 im Gehäuse 20.

Schließlich befindet sich der erste Stellarm 50 an der flachsten Stelle der ersten Kulisse 56 und befindet sich der zweite Stellarm 52 an der tiefsten Stelle der zweiten Kulisse 58. Als Ergebnis wird die Seite der Profilplatte 46, an der der erste Stellarm 50 angebracht ist, nach außen gedrückt und wird die andere Seite der Profilplatte 46, an der der zweite Stellarm 52 angebracht ist, nach innen gezogen. Das zweite Verriegelungselement 46 wird somit um seine Schwenkachse 48 geschwenkt bis es nicht mehr aus dem ersten Profilabschnitt 30 des zweiten Profilelements 28 heraus ragt. Das zweite Verriegelungselement 46 und damit der gesamte Adapter 18 sind damit von der Aufnahme(öffnung) der Fördertechnik 12 gelöst.

Die zwei zweiten Verriegelungselemente 46 werden dabei im Wesentlichen synchron zueinander geschwenkt. Außerdem erfolgt die Bewegung der zweiten Verriegelungselemente 46 im Wesentlichen gegensynchron zur Bewegung des ersten Verriegelungselements 44, sodass sich entweder nur das erste Verriegelungselement 44 in seiner den Adapter 18 an dem Werkstück 10 verriegelnden Stellung befindet oder nur die zweiten Verriegelungselemente 44 in ihrer den Adapter 18 an der Förder-technik 12 verriegelnden Stellung befinden.

Der Adapter 18 kann - je nach Bedarf - statisch oder schwimmend an der Fördertechnik 12 verriegelt werden.

Wie in Fig. 5 veranschaulicht, weist die Fördertechnik 12 für die statische, d.h. positionsgenaue Verriegelung eine Aufnahmeöffnung 60 auf, in welche das zweite Profilelement 28 des Adapters 18 im Wesentlichen formschlüssig eingeführt werden kann. Mittels der oben beschriebenen Verriegelungsmechanik 34, genauer mit deren zweiten Verriegelungselementen 46, wird der Adapter dann in dieser Aufnahmeöffnung 60 verriegelt. Beispielsweise greifen die zweiten Verriegelungselemente 46 in Ausnehmungen oder Kulissen ein, die in der Aufnahmeöffnung 60 vorgesehen sind. Im Ergebnis ist der Adapter 18 statisch an der Fördertechnik 12 fixiert.

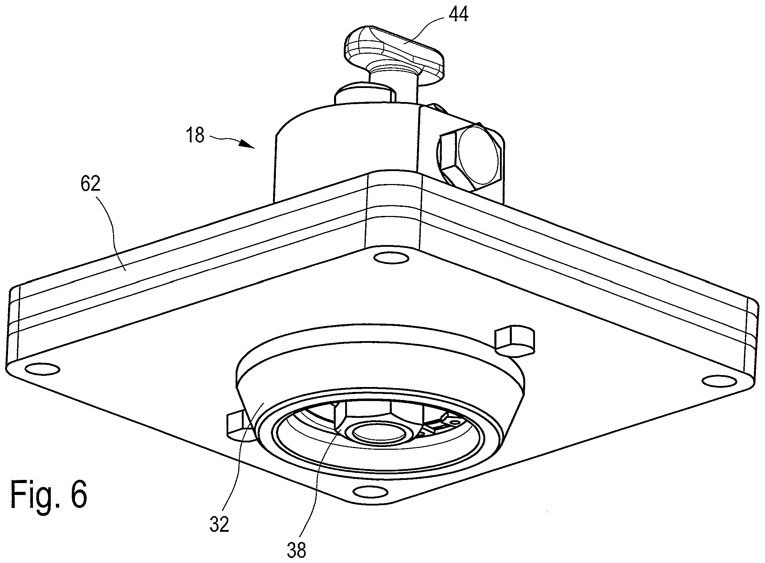

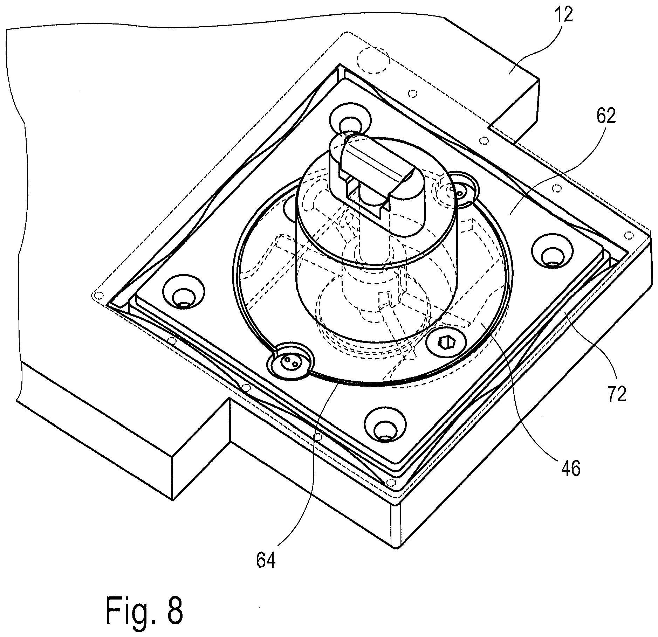

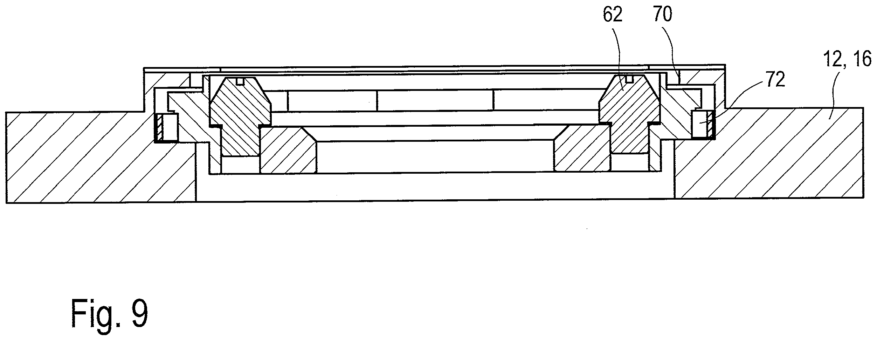

Bei der schwimmenden Verriegelung, wie sie in Fig. 6 bis 9 veranschaulicht ist, weist die Fördertechnik 12 zusätzlich einen Halter 62 auf, der mit Spiel (z.B. ± 3 mm) in eine Aufnahmeöffnung 70 in der Fördertechnik 12 eingesetzt ist. Wie in Fig. 8 und 9 dargestellt, sind in dem Zwischenraum zwischen dem Halter 62 und der Aufnahmeöffnung 70 in der Fördertechnik 12 elastische Elemente 72 (z.B. Blattfedern, etc.) angeordnet.

Der Halter 62 weist seinerseits eine Aufnahmeöffnung 64 auf, in welche das zweite Profilelement 28 des Adapters 18 im Wesentlichen formschlüssig eingeführt werden kann. Mittels der oben beschriebenen Verriegelungsmechanik 34, genauer mit deren zweiten Verriegelungselementen 46, wird der Adapter dann in dieser Aufnahmeöffnung 64 des Halters 62 verriegelt. Auch bei dieser Ausführungsvariante greifen die zweiten Verriegelungselemente 46 beispielsweise in Ausnehmungen 66 oder Kulissen ein, die in der Aufnahmeöffnung 64 des Halters 62 vorgesehen sind. Durch das Spiel des Halters 62 in der Aufnahmeöffnung 70 der Fördertechnik 12 ist der Adapter 18 im Ergebnis dann schwimmend an der Fördertechnik 12 fixiert. Auf diese Weise können zum Beispiel Fertigungstoleranzen der Fahrzeugkarossen 10 bzw. ihrer Aufnahmepunkte ausgeglichen werden.

Dieser Halter 62 kann wahlweise fest, d.h. unlösbar in die Fördertechnik 12 eingebaut oder integriert sein oder als Austausch/Ersatzteil lösbar und/oder wechselbar an der Fördertechnik 12 angebracht sein.

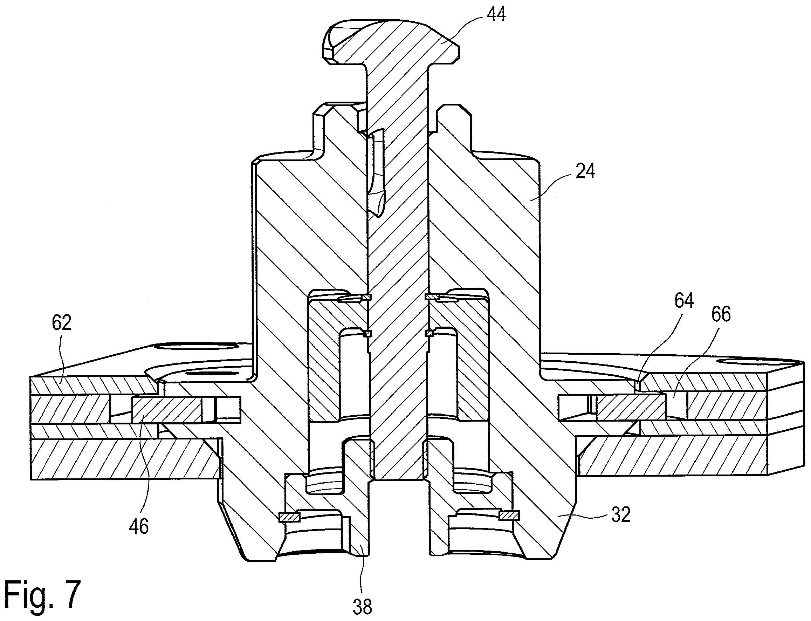

Wie in Fig. 6 und 7 veranschaulicht, kann der Halter 62 mit seiner Aufnahmeöffnung 64 so ausgestaltet sein, dass der Adapter 18 mit seinem zweiten Profilabschnitt 32 des zweiten Profilelements 28 durch die Aufnahmeöffnung 64 des Halters 62 hindurch ragt. Auf diese Weise ist das Betätigungselement 38 des Adapters 18 für Werkzeuge leichter zugänglich. Diese Konstellation ist in entsprechender Weise auch bei der statischen Verriegelung von Fig. 5 möglich, wenn die Fördertechnik 12 und ihre Aufnahmeöffnung 60 entsprechend konzipiert sind.

Obwohl nicht dargestellt, können der Adapter 18 (z.B. am ersten Profilabschnitt 30 des zweiten Profilelements 28), die Aufnahmen der Werkstücke 10 und/oder die Aufnahmeöffnungen 60, 64 der Fördertechnik 12 bzw. des Halters 62 optional mit Puffer- oder Dämpfungselementen ausgestattet sein, die während des Einführens des Adapters 18 in die jeweiligen Aufnahmen 60, 64, 74 für einen ein-, zwei- oder dreidimensionalen Toleranzausgleich sorgen können.

Obwohl nicht dargestellt, kann wahlweise ein Betätigungs- oder Antriebsmechanismus zum Verstellen der Verriegelungsmechanik 34 zwischen einer ersten Betriebsstellung, in welcher der Adapter 18 an der Aufnahme 74 eines Werkstücks 10 verriegelbar ist, und einer zweiten Betriebsstellung, in welcher der Adapter 18 an der Aufnahme 60, 64 der Fördertechnik bzw. ihres Halters 62 verriegelbar ist, in die Fördertechnik 12 integriert sein. Dieser Betätigungs- oder Antriebsmechanismus kann beispielsweise über die Fördertechnik 12 angesteuert werden, sodass ein hoher Automationsgrad erzielbar ist. Der Betätigungs- oder Antriebsmechanismus ist zum Beispiel motorisch, pneumatisch und/oder hydraulisch ausgestaltet.

Obwohl nicht dargestellt, kann die Fördertechnik 12 zudem optional eine Sensorik zum Erfassen einer Betriebsstellung des Adapters 18 und/oder eines Verriegelungszustandes des Adapters 18 an der Aufnahme 74 eines Werkstücks 10 oder an der Aufnahme 60, 64 der Fördertechnik 12 auf. Die Sensorik kann die erfasste Betriebsstellung bzw. den erfassten Verriegelungszustand an eine übergeordnete Steuerung der Fertigungs- oder Montagelinie rückmelden.

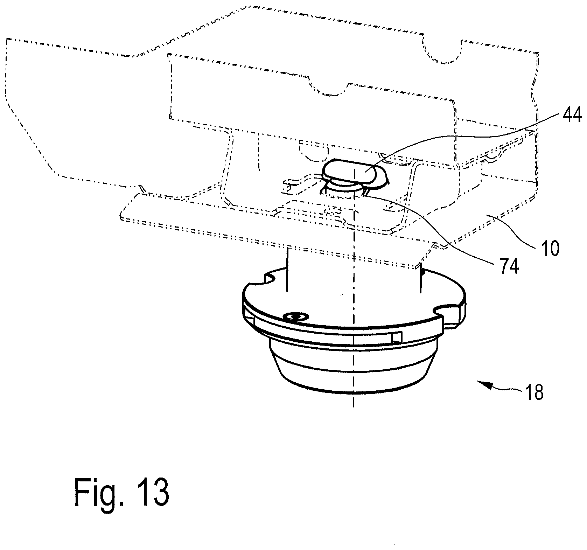

Fig. 13 zeigt eine Verriegelung des oben beschriebenen Adapters 18 an einer Aufnahme 74 einer Fahrzeugkarosse 10. Wie in Fig. 13 angedeutet, hintergreift das erste Verriegelungselement 44 des Adapters 18 in der in Fig. 10 bis 12 gezeigten Betriebsstellung der Verriegelungsmechanik 34 die Aufnahmeöffnung 74 in der Karosse 10 des Fahrzeugs. In diesem Betriebszustand kann ein geeignetes Werkzeug an dem zweiten Profilelement 28 des Adapters 18 angreifen und die Karosse 10 in Position halten (z.B. gegen die Federkraft von Stoßdämpfern bei der Montage des Fahr- und Räderwerks während der Hochzeit).

In anderen Fertigungsprozessen oder Fertigungsphasen kann vorzugsweise eine Variante der oben beschriebenen Adapter 18 zum Einsatz kommen.

Das oben beschriebene Verfahren, bei dem der Adapter zwischen zwei Betriebsstellungen verstellbar ist, in denen er wahlweise am Werkstück oder an der Fördertechnik verriegelbar ist, kann zum Beispiel vorteilhafterweise bei der Endmontage (einschließlich der Hochzeit) von Fahrzeugen benutzt werden. Während des Herstellungsprozesses von Hybrid- oder Elektrofahrzeugen kann es jedoch während oder nach dem Einbau der üblicherweise großen und schweren Batterie zu einem Problem kommen. Wird die Batterie zum Beispiel im hinteren Fahrzeugbereich eingebaut, verschiebt sich der Schwerpunkt des Werkstücks entsprechend nach hinten und die vorderen Aufnahmepunkte der Fördertechnik bleiben nahezu unbelastet. Als Ergebnis ist das Werkstück während des Transports nicht durch sein Eigengewicht sicher auf der Fördertechnik gehalten.

Um dieses Problem zu lösen, kann der oben beschriebene Adapter 18 der Erfindung so modifiziert werden, dass er neben der ersten Betriebsstellung, in der er an der Aufnahme 74 des Werkstücks 10 verriegelbar ist, und der zweiten Betriebsstellung, in der er an der Aufnahme 60, 64 der Fördertechnik 12 verriegelbar ist, noch eine dritte Betriebsstellung besitzt. In dieser dritten Betriebsstellung ist der Adapter sowohl an der Aufnahme 74 des Werkstücks 10 als auch an der Aufnahme 60, 64 der Fördertechnik 12 verriegelbar.

Vorzugsweise kann der Adapter von seiner ersten Betriebsstellung über die zusätzliche dritte Betriebsstellung in seine zweite Betriebsstellung bewegt werden und umgekehrt.

Analog zu dem in Fig. 2 bis 13 dargestellten Ausführungsbeispiel kann dies auch in der Modifikation über ein gemeinsames Stellelement 36 und eine Kulissenführung 40, 42 erfolgen.

### BEZUGSZIFFERNLISTE

- 10: Werkstück, z.B. Karosse
- 12: Fördertechnik
- 14: Hängewagen
- 16: Greifarme
- 18: Adapter
- 20: Gehäuse
- 22: erstes Profilelement
- 24: erster Profilabschnitt, z.B. Zylinder
- 26: zweiter Profilabschnitt, z.B. Dorn
- 28: zweites Profilelement
- 30: erster Profilabschnitt, z.B. Scheibe
- 32: zweiter Profilabschnitt, z.B. Kegelstumpf
- 34: Verriegelungsmechanik
- 36: Stellelement, z.B. Welle
- 38: Betätigungselement, z.B. Sechskantmutter
- 40: Führungsstift
- 42: Kulisse
- 44: erstes Verriegelungselement
- 46: zweites Verriegelungselement
- 48: Schwenkachse
- 50: erster Stellarm
- 52: zweiter Stellarm
- 54: Stellbuchse
- 56: erste Kulisse
- 58: zweite Kulisse
- 60: Aufnahme, z.B. Aufnahmeöffnung der Fördertechnik
- 62: Halter
- 64: Aufnahme, z.B. Aufnahmeöffnung des Halters
- 66: Ausnehmung in 64
- 68: Längsachse
- 70: Aufnahme, z.B. Aufnahmeöffnung der Fördertechnik für Halter
- 72: elastische Elemente
- 74: Aufnahme, z.B. Aufnahmeöffnung des Werkstücks

## Patentansprüche

1. Vorrichtung zum Fördern von Werkstücken (10), insbesondere in einer Fertigungslinie von Kraftfahrzeugen, aufweisend eine Fördertechnik (12) zum Tragen und Transportieren der Werkstücke (10) und einen Adapter (18) zum Verbinden der Werkstücke (10) mit der Fördertechnik (12),
wobei der Adapter (18) eine Verriegelungsmechanik (34) mit wenigstens einem ersten Verriegelungselement (44) zum Verriegeln des Adapters (18) an der Aufnahme (74) des Werkstücks (10) und wenigstens einem zweiten Verriegelungselement (46) zum Verriegeln des Adapters (18) an der Aufnahme (60, 64) der Fördertechnik (12) aufweist,
**dadurch gekennzeichnet, dass**
die Verriegelungsmechanik (34) ein Stellelement (36) zum Betätigen des wenigstens einen ersten Verriegelungselements (44) und des wenigstens einen zweiten Verriegelungselements (46) aufweist; und
das wenigstens eine erste Verriegelungselement (44) und das wenigstens eine zweite Verriegelungselement (46) über das Stellelement (36) derart miteinander gekoppelt sind, dass sich entweder das wenigstens eine erste Verriegelungselement (44) in seiner den Adapter (18) an der Aufnahme (74) des Werkstücks (10) verriegelbaren Stellung befindet oder das wenigstens eine zweite Verriegelungselement (46) in seiner den Adapter (18) an der Aufnahme (60, 64) der Fördertechnik (12) verriegelbaren Stellung befindet oder das wenigstens eine erste Verriegelungselement (44) und das wenigstens eine zweite Verriegelungselement (46) in ihren den Adapter (18) an der Aufnahme (74, 60, 64) des Werkstücks (10) bzw. der Fördertechnik (12) verriegelbaren Stellung befinden.

2. Vorrichtung nach Anspruch 1, bei welcher
der Adapter (18) ein erstes Profilelement (22) zum zumindest teilweisen Eingreifen an der Aufnahme (74) des Werkstücks (10) und ein zweites Profilelement (28) zum zumindest teilweisen Eingreifen an der Aufnahme (60, 64) der Fördertechnik (12) aufweist.

3. Vorrichtung nach einem der vorhergehenden Ansprüche, bei welcher
das wenigstens eine erste Verriegelungselement (44) und/ oder das wenigstens eine zweite Verriegelungselement (46) an dem Stellelement (36) befestigt oder einstückig mit dem Stellelement (36) ausgebildet sind.

4. Vorrichtung nach einem der vorhergehenden Ansprüche, bei welcher
das wenigstens eine erste Verriegelungselement (44) und/oder das wenigstens eine zweite Verriegelungselement (46) wenigstens ein Zwischenelement (50, 52) aufweisen, das mit dem Stellelement (36) gekoppelt ist.

5. Vorrichtung nach einem der Ansprüche 1 bis 4, bei welcher
das Stellelement (36) mittels einer Kulissenführung (40, 42) in dem Adapter (18) zwischen einer ersten Betriebsstellung der Verriegelungsmechanik (34), in welcher der Adapter (18) an der Aufnahme (74) des Werkstücks (10) verriegelbar ist, und einer zweiten Betriebsstellung der Verriegelungsmechanik (34), in welcher der Adapter (18) an der Aufnahme (60, 64) der Fördertechnik (12) verriegelbar ist, geführt ist.

6. Vorrichtung nach einem der Ansprüche 1 bis 4, bei welcher
das Stellelement (36) mittels einer Kulissenführung (40, 42) in dem Adapter (18) über eine dritte Betriebsstellung der Verriegelungsmechanik (34), in welcher der Adapter (18) an den Aufnahmen (74, 60, 64) des Werkstücks (10) und der Fördertechnik (12) verriegelbar ist, zwischen einer ersten Betriebsstellung der Verriegelungsmechanik (34), in welcher der Adapter (18) an der Aufnahme (74) des Werkstücks (10) verriegelbar ist, und einer zweiten Betriebsstellung der Verriegelungsmechanik (34), in welcher der Adapter (18) an der Aufnahme (60, 64) der Fördertechnik (12) verriegelbar ist, geführt ist.

7. Vorrichtung nach einem der vorhergehenden Ansprüche, bei welcher
das wenigstens eine erste Verriegelungselement (44) und/ oder das wenigstens eine zweite Verriegelungselement (46) derart ausgestaltet sind, dass sie zwischen einer den Adapter (18) verriegelnden Betriebsstellung und einer den Adapter (18) nicht verriegelnden Betriebsstellung um eine Längsachse (68) des Adapters (18) drehbar sind.

8. Vorrichtung nach einem der vorhergehenden Ansprüche, bei welcher
das wenigstens eine erste Verriegelungselement (44) und/ oder das wenigstens eine zweite Verriegelungselement (46) derart ausgestaltet sind, dass sie zwischen einer den Adapter (18) verriegelnden Betriebsstellung und einer den Adapter (18) nicht verriegelnden Betriebsstellung parallel zu einer Längsachse (68) des Adapters (18) verschiebbar sind.

9. Vorrichtung nach einem der vorhergehenden Ansprüche, bei welcher
das wenigstens eine erste Verriegelungselement (44) und/ oder das wenigstens eine zweite Verriegelungselement (46) derart ausgestaltet sind, dass sie zwischen einer den Adapter (18) verriegelnden Betriebsstellung und einer den Adapter (18) nicht verriegelnden Betriebsstellung um eine Schwenkachse (48) parallel zu einer Längsachse (68) des Adapters (18) drehbar sind.

10. Vorrichtung nach einem der vorhergehenden Ansprüche, bei welcher
das wenigstens eine erste Verriegelungselement (44) und/oder das wenigstens eine zweite Verriegelungselement (46) derart ausgestaltet sind, dass sie in Richtung parallel zu einer Längsachse (68) des Adapters (18) unverschiebbar in dem ersten Profilelement (22) bzw. dem zweiten Profilelement (28) gehalten sind.

11. Vorrichtung nach einem der vorhergehenden Ansprüche, bei welcher
die Verriegelungsmechanik (34) ein bevorzugt mit einem Werkzeug betätigbares Betätigungselement (38) aufweist, mit dem die Verriegelungsmechanik (34) zwischen einer ersten Betriebsstellung, in welcher der Adapter (18) an der Aufnahme (74) des Werkstücks (10) verriegelbar ist, und einer zweiten Betriebsstellung, in welcher der Adapter (18) an der Aufnahme (60, 64) der Fördertechnik (12) verriegelbar ist, verstellbar ist.

12. Vorrichtung nach einem der vorhergehenden Ansprüche, bei welcher
die Fördertechnik (12) einen Betätigungsmechanismus zum Verstellen der Verriegelungsmechanik (34) zwischen einer ersten Betriebsstellung, in welcher der Adapter (18) an einer Aufnahme (74) des Werkstücks (10) verriegelbar ist, und einer zweiten Betriebsstellung, in welcher der Adapter (18) an einer Aufnahme (60, 64) der Fördertechnik (12) verriegelbar ist, aufweist.

13. Vorrichtung nach einem der vorhergehenden Ansprüche, bei welcher
die Fördertechnik (12) wenigstens eine Aufnahme (60) aufweist, an welcher der Adapter (18) statisch verriegelbar ist.

14. Vorrichtung nach einem der vorhergehenden Ansprüche, bei welcher
die Fördertechnik (12) wenigstens eine Aufnahme (70) aufweist, an welcher ein Halter (70) schwimmend montierbar ist; und
der Halter (70) eine Aufnahme (64) aufweist, an welcher der Adapter (18) statisch verriegelbar ist.

15. Adapter (18) für eine Vorrichtung nach einem der Ansprüche 1 bis 14.

16. Fördertechnik (12) für eine Vorrichtung nach einem der Ansprüche 1 bis 14.

## Claims

1. An apparatus for conveying workpieces (10), in particular in a manufacturing line of automobiles, comprising a conveyor system (12) for supporting and transporting the workpieces (10), and an adapter (18) for connecting the workpieces (10) to said conveyor system (12),
wherein said adapter (18) comprises a locking mechanism (34) having at least one first locking element (44) for locking said adapter (18) on the receptacle (74) of the workpiece (10) and at least one second locking element (46) for locking said adapter (18) on the receptacle (60, 64) of said conveyor system (12),
**characterized in that**
said locking mechanism (34) comprises an actuator (36) for operating said at least one first locking element (44) and said at least one second locking element (46); and said at least one first locking element (44) and said at least one second locking element (46) are coupled together via said actuator (36) such that either said at least one first locking element (44) is in its position to lock said adapter (18) on said receptacle (74) of the workpiece (10) or said at least one second locking element (46) is in its position to lock said adapter (18) on said receptacle (60, 64) of said conveyor system (12) or said at least one first locking element (44) and said at least one second locking element (46) are in their positions to lock said adapter (18) on said receptacle (74, 60, 64) of the workpiece (10) or said conveyor system (12).

2. The apparatus according to claim 1, wherein
said adapter (18) comprises a first profiled element (22) for at least partially engaging with said receptacle (74) of the workpiece (10) and a second profiled element (28) for at least partially engaging with said receptacle (60, 64) of said conveyor system (12).

3. The apparatus according to any one of preceding claims, wherein
said at least one first locking element (44) and/or said at least one second locking element (46) are fixed to said actuator (36) or formed integrally with said actuator (36).

4. The apparatus according to any one of preceding claims, wherein
said at least one first locking element (44) and/or said at least one second locking element (46) comprise at least one intermediate element (50, 52) being coupled to said actuator (36).

5. The apparatus according to any one of claims 1 to 4, wherein
said actuator (36) is guided between a first operating position of said locking mechanism (34), in which said adapter (18) is lockable on said receptacle (74) of the workpiece (10), and a second operating position of said locking mechanism (34), in which said adapter (18) is lockable on said receptacle (60, 64) of said conveyor system (12), by means of a slotted guide (40, 42) in said adapter (18).

6. The apparatus according to any one of claims 1 to 4, wherein
said actuator (36) is guided between a first operating position of said locking mechanism (34), in which said adapter (18) is lockable on said receptacle (74) of the workpiece (10), and a second operating position of said locking mechanism (34), in which said adapter (18) is lockable on said receptacle (60, 64) of said conveyor system (12), via a third operating position of said locking mechanism (34), in which said adapter (18) is lockable on said receptacles (74, 60, 64) of the workpiece (10) and said conveyor system (12), by means of a slotted guide (40, 42) in said adapter (18).

7. The apparatus according to any one of preceding claims, wherein
said at least one first locking element (44) and/or said at least one second locking element (46) are designed such that they are rotatable around a longitudinal axis (68) of said adapter (18) between an operating position locking said adapter (18) and an operating position not locking said adapter (18).

8. The apparatus according to any one of preceding claims, wherein
said at least one first locking element (44) and/or said at least one second locking element (46) are designed such that they are movable parallel to a longitudinal axis (68) of said adapter (18) between an operating position locking said adapter (18) and an operating position not locking said adapter (18).

9. The apparatus according to any one of preceding claims, wherein
said at least one first locking element (44) and/or said at least one second locking element (46) are designed such that they are rotatable around a swivel axis (48) parallel to a longitudinal axis (68) of said adapter (18) between an operating position locking said adapter (18) and an operating position not locking said adapter (18).

10. The apparatus according to any one of preceding claims, wherein
said at least one first locking element (44) and/or said at least one second locking element (46) are designed such that they are held immovably in a direction parallel to a longitudinal axis (68) of said adapter (18) in said first profiled element (22) or said second profiled element (28).

11. The apparatus according to any one of preceding claims, wherein
said locking mechanism (34) comprises an operating element (38) being preferably operable by a tool, by which said locking mechanism (34) is shiftable between a first operating position, in which said adapter (18) is lockable on said receptacle (74) of the workpiece (10), and a second operating position, in which said adapter (18)is lockable on said receptacle (60, 64) of said conveyor system (12).

12. The apparatus according to any one of preceding claims, wherein
said conveyor system (12) comprises an operating mechanism for shifting said locking mechanism (34) between a first operating position, in which said adapter (18) is lockable on a receptacle (74) of the workpiece (10), and a second operating position, in which said adapter (18) is lockable on a receptacle (60, 64) of said conveyor (12).

13. The apparatus according to any one of the preceding claims, wherein
said conveyor system (12) comprises at least one receptacle (60) on which said adapter (18) is statically lockable.

14. The apparatus according to any one of the preceding claims, wherein
said conveyor system (12) comprises at least one receptacle (70) on which a holder (70) is mountable in a floating manner; and
said holder (70) comprises a receptacle (64) on which said adapter (18) is statically lockable.

15. An adapter (18) for an apparatus according to any one of claims 1 to 14.

16. A conveyor system (12) for an apparatus according to any one of claims 1 to 14.

## Revendications

1. Dispositif de convoyage de pièces à usiner (10), en particulier dans une ligne de production de véhicules automobiles, comprenant un système de convoyage (12) pour porter et transporter des pièces à usiner (10) et un adaptateur (18) pour relier les pièces à usiner (10) au système de convoyage (12),
dans lequel l'adaptateur (18) comprend un mécanisme de verrouillage (34) ayant au moins un premier élément de verrouillage (44) pour verrouiller l'adaptateur (18) dans le logement (74) de la pièce à usiner (10) et au moins un deuxième élément de verrouillage (46) pour verrouiller l'adaptateur (18) dans le logement (60, 64) du système de convoyage (12),
**caractérisé en ce que**
ledit mécanisme de verrouillage (34) comprend un élément de réglage (36) pour actionner ledit au moins un premier élément de verrouillage (44) et ledit au moins un deuxième élément de verrouillage (46) ; et
ledit au moins un premier élément de verrouillage (44) et ledit au moins un deuxième élément de verrouillage (46) sont couplés entre eux par l'intermédiaire de l'élément de réglage (36) de telle sorte que soit ledit au moins un premier élément de verrouillage (44) se trouve dans sa position de pouvoir verrouiller l'adaptateur (18) dans le logement (74) de la pièce à usiner (10), soit ledit au moins un deuxième élément de verrouillage (46) se trouve dans sa position de pouvoir verrouiller l'adaptateur (18) dans le logement (60, 64) du système de convoyage (12), soit ledit au moins un premier élément de verrouillage (44) et ledit au moins un deuxième élément de verrouillage (46) se trouvent dans leur position de pouvoir verrouiller l'adaptateur (18) dans le logement (74, 60, 64), respectivement, de la pièce à usiner (10) et du système de convoyage (12).

2. Dispositif selon la revendication 1, dans lequel
l'adaptateur (18) comprend un premier élément profilé (22) pour au moins s'engager partiellement dans le logement (74) de la pièce à usiner (10) et un deuxième élément profilé (28) pour au moins s'engager partiellement dans le logement (60, 64) du système de convoyage (12).

3. Dispositif selon l'une des revendications précédentes, dans lequel
ledit au moins un premier élément de verrouillage (44) et/ou ledit au moins un deuxième élément de verrouillage (46) sont fixés à l'élément de réglage (36) ou sont formés d'une seule pièce avec l'élément de réglage (36).

4. Dispositif selon l'une des revendications précédentes, dans lequel
ledit au moins un premier élément de verrouillage (44) et/ou ledit au moins un deuxième élément de verrouillage (46) comprennent au moins un élément intermédiaire (50, 52) qui est couplé à l'élément de réglage (36).

5. Dispositif selon l'une des revendications 1 à 4, dans lequel
l'élément de réglage (36) est guidé, au moyen d'un guidage coulissant (40, 42) dans l'adaptateur (18), entre une première position de fonctionnement du mécanisme de verrouillage (34) dans laquelle l'adaptateur (18) peut être verrouillé dans le logement (74) de la pièce à usiner (10), et une deuxième position de fonctionnement du mécanisme de verrouillage (34) dans laquelle l'adaptateur (18) peut être verrouillé dans le logement (60, 64) du système de convoyage (12).

6. Dispositif selon l'une des revendications 1 à 4, dans lequel
l'élément de réglage (36) est guidé, au moyen d'un guidage coulissant (40, 42) dans l'adaptateur (18) et par l'intermédiaire d'une troisième position de fonctionnement du mécanisme de verrouillage (34) dans laquelle l'adaptateur (18) peut être verrouillé dans les logements (74, 60, 64) de la pièce à usiner (10) et du système de convoyage (12), entre une première position de fonctionnement du mécanisme de verrouillage (34) dans laquelle l'adaptateur (18) peut être verrouillé dans le logement (74) de la pièce à usiner (10), et une deuxième position de fonctionnement du mécanisme de verrouillage (34) dans laquelle l'adaptateur (18) peut être verrouillé dans le logement (60, 64) du système de convoyage (12).

7. Dispositif selon l'une des revendications précédentes, dans lequel
ledit au moins un premier élément de verrouillage (44) et/ou ledit au moins un deuxième élément de verrouillage (46) sont conçus de telle sorte qu'ils puissent pivoter autour d'un axe longitudinal (68) de l'adaptateur (18) entre une position de fonctionnement verrouillant l'adaptateur (18) et une position de fonctionnement ne verrouillant pas l'adaptateur (18).

8. Dispositif selon l'une des revendications précédentes, dans lequel
ledit au moins un premier élément de verrouillage (44) et/ou ledit au moins un deuxième élément de verrouillage (46) sont conçus de telle sorte qu'ils puissent se déplacer parallèlement à un axe longitudinal (68) de l'adaptateur (18) entre une position de fonctionnement verrouillant l'adaptateur (18) et une position de fonctionnement ne verrouillant pas l'adaptateur (18).

9. Dispositif selon l'une des revendications précédentes, dans lequel
ledit au moins un premier élément de verrouillage (44) et/ou ledit au moins un deuxième élément de verrouillage (46) sont conçus de telle sorte qu'ils puissent pivoter autour d'un axe de pivot (48) parallèlement à un axe longitudinal (68) de l'adaptateur (18) entre une position de fonctionnement verrouillant l'adaptateur (18) et une position de fonctionnement ne verrouillant pas l'adaptateur (18).

10. Dispositif selon l'une des revendications précédentes, dans lequel
ledit au moins un premier élément de verrouillage (44) et/ou ledit au moins un deuxième élément de verrouillage (46) sont conçus de telle sorte qu'ils soient maintenus dans, respectivement, le premier élément profilé (22) et le deuxième élément profilé (28) sans pouvoir se déplacer dans une direction parallèle à un axe longitudinal (68) de l'adaptateur (18).

11. Dispositif selon l'une des revendications précédentes, dans lequel
ledit mécanisme de verrouillage (34) comprend un élément d'actionnement (38) pouvant être actionné de préférence avec un outil, avec lequel le mécanisme de verrouillage (34) peut être réglé entre une première position de fonctionnement dans laquelle l'adaptateur (18) peut être verrouillé dans le logement (74) de la pièce à usiner (10), et une deuxième position de fonctionnement dans laquelle l'adaptateur (18) peut être verrouillé dans le logement (60, 64) du système de convoyage (12).

12. Dispositif selon l'une des revendications précédentes, dans lequel
le système de convoyage (12) comprend un mécanisme d'actionnement pour régler le mécanisme de verrouillage (34) entre une première position de fonctionnement dans laquelle l'adaptateur (18) peut être verrouillé dans le logement (74) de la pièce à usiner (10), et une deuxième position de fonctionnement dans laquelle l'adaptateur (18) peut être verrouillé dans le logement (60, 64) du système de convoyage (12).

13. Dispositif selon l'une des revendications précédentes, dans lequel
le système de convoyage (12) comprend au moins un logement (60) dans lequel l'adaptateur (18) peut être verrouillé de manière statique.

14. Dispositif selon l'une des revendications précédentes, dans lequel
le système de convoyage (12) comprend au moins un logement (70) dans lequel un élément de retenue (70) peut être monté de manière flottante ; et
l'élément de retenue (70) comprend un logement (64) dans lequel l'adaptateur (18) peut être verrouillé de manière statique.

15. Adaptateur (18) pour un dispositif selon l'une des revendications 1 à 14.

16. Système de convoyage (12) pour un dispositif selon l'une des revendications 1 à 14.
